# EUROPEAN PATENT APPLICATION

(11) **EP 2 238 833 A1**
(43) Date of publication of application: **13.10.2010**
(21) Application number: 08865448.8
(22) Date of filing: 05.12.2008
(51) Int. Cl.: A01N 47/36, A01N 33/18, A01P 13/00

(54) **HERBICIDE COMPOSITION**

(30) Priority: 26.12.2007 JP 2007333997
(71) Applicant: Sumitomo Chemical Company, Limited, Tokyo 104-8260 (JP)
(72) Inventor: IKEDA, Hajime, Kobe-shi Hyogo 651-1304 (JP); KIZAWA, Satoru, Kakogawa-shi Hyogo 675-0025 (JP)
(74) Representative: Fickert, Stefan Christopher
(86) International application number: PCT/JP2008/072596
(87) International publication number: WO 2009/081759

(57) **Abstract**

Disclosed is a herbicide composition containing, as active ingredients, 1-(2-chloroimidazo[1,2-a]pyridin-3-ylsulfonyl)-3-(4,6-dimethoxypyrimidin-2-yl)urea and N-(1-ethylpropyl)-3,4-dimethyl-2,6-dinitrobenzenamine. The herbicide composition has excellent effects but does not have harmful effects on crops.

## Description

### Technical Field

The present invention relates to a herbicide composition and a weed control method.

### Background Art

Various herbicides are currently marketed and used. However, sometimes, their effects are not necessarily satisfactory because there are various kinds of weeds to be controlled and they grow at various times. Then, a herbicide composition having further excellent herbicidal activities is demanded.

### Disclosure of the Invention

The present invention provides a herbicide composition having excellent herbicidal activities, that is, a herbicide composition comprising, as active ingredients, 1-(2-chloroimidazo[1,2-a]pyridin-3-ylsulfonyl)-3-(4,6-dimethoxypyrimidin-2-yl)urea (generic name: imazosulfuron) and N-(1-ethylpropyl)-3,4-dimethyl-2,6-dinitrobenzenamine (generic name: pendimethalin).

Further, the present invention provides a weed control method using imazosulfuron and pendimethalin.

Imazosulfuron is a herbicidally active compound described in Crop Protection Handbook, Vol. 89 (2003), Meister Publishing Company, ISBN: 1-892829-06-1), page C440. In the present invention, imazosulfuron produced by a known production method can be used, or a commercially available product can be used.

Pendimethalin is a herbicidally active compound described in Crop Protection Handbook, Vol. 89 (2003), Meister Publishing Company, ISBN: 1-892829-06-1), page C360. In the present invention, pendimethalin produced by a known production method can be used, or a commercially available product can be used.

The herbicide composition of the present invention has an herbicidal activity to a wide range of weeds, and can effectively control various weeds in fields for crops, fields for horticultural crops (e.g. vegetable field and arboretum ground), turf or non-crop lands, where common plowing or non-plowing cultivation is carried out, without giving effects of chemicals which become a problem for useful plants cultivating in fields for crops, fields for horticultural crops or turf.

Examples of the fields for crops to which the herbicide composition can be applied include fields for edible crops such as peanut field, soybean field, corn field, wheat field, barley field, rye field, and triticale field; fields for feed crops such as sorghum field, and oat field; and fields for industrial crops such as cotton field, and sugarcane field. Examples of the vegetable fields to which the herbicide composition of the present invention can be applied include fields for cultivating Solanaceae vegetables (e.g. eggplant, tomato, green pepper, hot pepper, and potato); Cucurbitaceae vegetables (e.g. cucumber, pumpkin, zucchini, watermelon, and melon); fields for cultivating Cruciferae vegetables (e.g. Japanese radish, turnip, horseradish, kohlrabi, Chinese cabbage, cabbage, brown mustard, broccoli, and cauliflower); fields for cultivating Compositae vegetables (e.g. burdock, garland chrysanthemum, artichoke, and lettuce); fields for cultivating Liliaceae vegetables (e.g. Welsh onion, onion, garlic, and asparagus); fields for cultivating Umbelliferae vegetables (e.g. carrot, parsley, celery, and parsnip); fields for cultivating Chenopodiaceae vegetables (e.g. spinach, and Swiss chard); Labiatae vegetables (e.g. Japanese basil, mint, basil, and lavender); strawberry field; sweet potato field; yam field; and aroid field. Examples of the arboretum ground to which the herbicide composition of the present invention can be applied include orchard, tea plantation, coffee plantation, banana plantation, coconut plantation, flowering tree garden, flowering tree field, nursery, nursery ground, timberland, and garden. Examples of the fruit trees in the present invention include pomaceous fruits (e.g. apple, common pear, Japanese pear, Chinese quince, and quince); stone fleshy fruits (e.g. peach, plum, nectarine, Japanese plum, cherry, apricot, and prune); citrus plants (e.g. Satsuma mandarin, orange, lemon, lime, and grapefruit); nuts (e.g. chestnut, walnut, hazel nut, almond, pistachio, cashew nut, and macadamia nut); berry fruits (e.g. blueberry, cranberry, blackberry, and raspberry); grape; persimmon; olive; and loquat. Examples of the turf to which the herbicide composition of the present invention can be applied include that of golf course, baseball ground, soccer pitch, racetrack, lawn field, athletic field, and park where lawn grasses such as Japanese lawngrass *(Zoysia japonica),* manilagrass (*Zoysia matrella*), bermudagrass (*Cynodon dactylon*), kikuyugrass (*Pennisetum clandestinum*), bahiagrass (*Paspalum notatum*), seashore paspalum *(Paspalum vaginatum),* St. Augustine grass (*Stenotaphrum secundatum*), buffalograss (*Buchloe dactyloides*), centipedegrass (*Eremochloa ophiuroides*), blue stems (*Bothriochloa* sp.), Indiangrass (*Sorahastrum nutans*), lovegrass (*Eragrostis* sp.), blue grama (*Bouteloua gracilis*), switchgrass (*Panicum virgatum*), creeping *bentgrass*(*Agrostis stolonifera*), Kentucky bluegrass (*Poa pratensis*), perennial ryegrass (*Lolium perenne*) and Fescue grasses *(Festuca* sp.).

Examples of the non-crop lands to which the herbicide composition of the present invention can be applied include athletic field, vacant lot, aside land of railroad track, park, parking, shoulder of road, riverside land, land under power lines, residential land, and factory site.

While the composition of the present invention can be used in the above various places (fields for crops, fields for horticultural crops, turf or non-crop lands), in particular, it can be used as a herbicide composition for wheat and barley fields to effectively control various weeds in wheat and barley fields, where common plowing or non-plowing cultivation is carried out, without giving effects of chemicals which become a problem for wheat and barley.

Examples of weeds which can be controlled by the composition of the present invention are as follows.
Polygonaceae weeds: *Polygonum convolvulus, Polygonum lapathiolium, Polygonum pennsylvanicum, Polygonum persicarua, Polygonum longisetum, Rumex japoniucs, Rumex crispus, Rumex obtusifolius, Polygonum cuspidatum;*
Portulacaceae weeds: *Portulaca oleracea;*
Caryophyllaceae weeds: *Stellaria* media, *Cerastium glomeratum;*
Chenopodiaceae weeds: *Chenopodium album, Kochia scoparia;*
Amaranthaceae weeds: *Amaranthus retroflexus, Amaranthus viridis, Amaranthus lividus, Amaranthus* spinosus, *Amaranthus hybridus, Amaranthus rudis;*
Brassicaceae weeds: *Raphanus raphanistrum, Sinapis arvensis, Capsella bursa-pastoris, Brassica juncea;*
Leguminosae weeds: *Sesbania exaltata, Cassia obtusifolia, Desmodium tortuosum, Triforium repens, Pueraria lobata, Vicia angustifolia;*
Malvaceae weeds: *Abutilon theophrasti, Sida spinosa;*
Violaceae weeds: *Viola arvensis, Viola tricolor;*
Rubiaceae weeds: *Galium aparine;*
Convolvulaceae weeds: *Ipomoea hederacea, Ipomoea purpurea, Ipomoea hederacea* var *integriumscula, Ipomea lacunosa, Convolvulus arvensis;*
Labiatae weeds: *Lamium purpureum, Lamium amplexicaule;*
Solanaceae weeds: *Datura stramonium, Solanum nigrum;*
Scrophulariaceae weeds: *Veronica hederaefolia, Veronica persia, Veronica arvensis;*
Compositae weeds: *Xanthium pensylvanicum, Helianthus annuus, Matricaria chamomilla, Matricaria perforate, Chrysantemum segetum, Matricaria matricarioides, Artemisa princeps, Solidago altissiuma, Taraxacum officinale, Galinosoga* ciliata, *Conyza canadensis, Ambrosia artemisiaefolia, Ambrosia trifida;*
Boraginaceae weeds: *Myosotis arvensis;*
Asclepiadaceae weeds: *Asclepias syriaca;*
Euphorbiaceae weeds: *Euphorbia helioscopia, Euphorbia maculata;*
Geraniaceae weeds: *Geranium carolinense, Erodium cicutarium;*
Papaveraceae weeds: *Papaver rhoeas;*
Gramineae weeds: *Echinochloa crus-galli, Setar ia viridis, Setaria faberi, Digitaria sanguinalis, Eleusine indica, Poa annua, Alopecurus* myosuroides, *Avena fatua, Sorghum halepensa, Agropyron repens, Lolium multiflorum, Lolium perenne, Bromus secalinus, Bromus tectorum, Apera spica-venti, Panicum dichotomiflorum, Panicum texanum, Sorghum vulgare;*
Cyperaceae weeds: *Cyperus iria, Cyperus rotundus, Cyperus esculentus, Kyllinga gracillima;*
Commelinaceae weeds: *Commelina communis, Commelina bengharensis;* and
Equisetaceae weeds: *Equisetum arvense.*

While the composition of the present invention can control the above-described wide varieties of weeds, in particular, it can effectively control Cyperaceae weeds.

In the composition of the present invention, the mixing ratio of imazosulfuron and pendimethalin used as the active ingredients is not specifically limited. However, a preferred weight ratio is within the range of about 1 : 0.5 to 1 : 100, more preferably, about 1 : 1 to 1 : 50. In case of using the composition of the present invention for wheat and barley fields, it is particularly preferred to select the mixing ratio of imazosulfuron and pendimethalin used as the active ingredients from the above described weight ratio.

The composition of the present invention can be a mixture of only imazosulfuron and pendimethalin or, usually, it can be formulated into a formulation by further mixing with, for example, a solid carrier or a liquid carried and, if necessary, further adding auxiliary agents for a formulation such as a surfactant. The composition of the present invention can be formulated into a formulation after mixing imazosulfuron and pendimethalin. Alternatively, the composition can be prepared by separately formulating into respective formulations of imazosulfuron and pendimethalin and then mixing these formulations. That is, imazosulfuron is used in combination with pendimethalin so as to prepare the composition of the present invention. The composition of the present invention can be produced according to a conventional production process of an agrichemical formulation. The total amount of imazosulfuron and pendimethalin is usually 1 to 90% by weight based on the total weight of a formulation in case that the formulation is in the form of, for example, emulsifiable concentrate, wettable formulation, granulated wettable formulation, aqueous liquid formulation, solution, or suspension (also referred to as flowable); is usually 0.01 to 10% by weight based on the total weight of a formulation in case that the formulation is in the form of, for example, oil solution, dust, or DL dust; or is usually 0.05 to 10% by weight based on the total weight of a formulation in case that the formulation is in the form of, for example, microgranule, microgranule F, fine granule F or granule. These concentrates can be appropriately changed according to a particular application. Examples of the solid carrier used for the formulation include fine powders or granules of clays (e.g. kaolin, diatomaceous earth, synthetic hydrous silicon oxide, Fubasami clay, bentonite, or acid clay), talcs, other inorganic minerals (e.g. sericite, quartz powder, sulfur powder, active carbon, or calcium carbonate), chemical fertilizers (e.g. ammonium sulfate, ammonium phosphate, ammonium nitrate, ammonium chloride, or urea). Examples of the liquid carrier include water, alcohols (e.g. methanol, or ethanol), ketones (e.g. acetone, methyl ethyl ketone, or cyclohexanone), aromatic hydrocarbons (e.g. toluene, xylene, ethylbenzene, or methylnaphthalene), nonaromatic hydrocarbons (e.g. hexane, cylcohexanone, or kerosene), esters (e.g. ethyl acetate, or butyl acetate), nitriles (e.g. acetonitrile, or isobutylonitrile), ethers (e.g. dioxane, or diisopropyl ether), acid amides (e.g. dimethylformamide, or dimethylacetamide), and halogenated hydrocarbons (e.g. dichloroethane, or trichloroethylene).

Examples of the surfactant used in the composition of the present invention include alkylsulfates, alkylsulfonates, alkylarylsulfonates, alkyl aryl ethers and polyoxyethylenated compounds thereof, polyoxyethylene glycol ethers, polyhydric alcohol esters, and sugar alcohol derivatives. Examples of other auxiliary agents for formulations include binders and dispersants such as casein, gelatin, polysaccharides (e.g. starch, gum arabic, cellulose derivatives, and alginic acid), lignin derivatives, bentonite, synthetic water-soluble polymers (e.g. polyvinyl alcohol, polyvinylpyrrolidone, and polyacrylic acids); and stabilizers such as PAP (acidic isopropyl phosphate), BHT (2,6-di-tert-butyl-4-methylphenol), BHA (2-/3-tert-butyl-4-methoxyphenol), vegetable oils, mineral oils, fatty acids and fatty esters.

The herbicidal activity of the composition of the present invention is expected to be further enhanced by using it with other herbicidally active compound(s), and the composition of the present invention can be mixed with or used together with other ingredients such as insecticides, bactericides, plant growth regulating agents, fertilizers, phytotoxicity reducing agents (safeners), and soil conditioners.

The method of the present invention is carried out by applying imazosulfuron and pendimethalin to a place or soil on which weeds grow, or subject weeds to be controlled. While imazosulfuron and pendimethalin can be applied separately, the following method using the composition of the present invention is convenient.

The composition of the present invention as such or a dilution thereof with, for example, water is sprayed to a place or soil on which weeds grow, or the plant body of subject weeds to be controlled. Specific examples of the method for spraying the composition of the present invention to soil include a method for spraying the composition on the surface of soil before emergence of a useful plant and before occurrence of weeds, a method for spraying the composition on the surface of soil from above after emergence of a useful plant and before occurrence of weeds, a method for spraying the composition on the surface of soil between crop rows after emergence of a useful plant and occurrence of weeds, and a method for spraying the composition on the surface of soil from above after emergence of a useful plant and after occurrence of weeds. In addition, specific examples of the method for spraying the composition of the present invention to the plant body of subject weeds to be controlled include a method for spraying the composition on foliage of weeds from above before emergence of a useful plant and after occurrence of weeds, and a method for spraying the composition on foliage of weeds from above after emergence of a useful plant and after occurrence of weeds.

In the method of the present invention, imazosulfuron and pendimethalin can be applied to soil of place in which weeds grow or are to grow, or weeds, simultaneously. Further, each of imazosulfuron and pendimethalin can be applied at a certain time interval. In this case, the weight ratio of imazosulfuron and pendimethalin applied is also within the range of, preferably about 1 : 0.5 to 1 : 100, more preferably about 1 : 1 to 1 : 50.

While the application amount of the composition of the present invention in the method of the present invention can be varied depending on a particular mixing ratio of imazosulfuron and pendimethalin, weather conditions, formulation form, application period, application method, application place, subject weeds to be controlled, and subject crop, the total amount of the active ingredients per 1 hectare is usually about 10 to about 2000 g in case of spraying on soil, and about 10 to about 2000 g in case of spraying on the plant body of weeds. When spraying the composition in the form of, for example, an emulsifiable concentrate, wettable formulation or suspension to the plant body of subjective weeds to be controlled, a given amount thereof is usually applied by diluting it with about 100 to about 2000 L of water per 1 hectare. When treating soil with granules, usually, granules as such are applied to the surface of soil. Further, when the composition of the present invention is applied to the plant body, it is expected to enhance the activity against weeds by addition of an adjuvant.

In the method of the present invention, the useful plant which can be grown or cultivated in a crop land where the active ingredients used for controlling weeds (imazosulfuron and pendimethalin) are applied includes that having herbicide resistance given by a classical breeding method, or a genetic engineering technique. Examples of the herbicide to be resisted include an HPPD inhibitor such as isoxaflutole, an ALS inhibitor such as imazethapyr or thifensulfuron-methyl; an EPSP synthase inhibitor; a glutamine synthase inhibitor; an auxin type herbicide such as 2,4-D or dicamba; and bromoxynil.

Examples of the useful plant having herbicide resistance given by a classical breeding method include crops resistant to imidazolinone herbicides such as imazethapyr, and STS soybean resistant to sulfonylurea herbicides such as thifensulfuron-methyl.

In addition, examples of the useful plant having herbicide resistance given by a genetic engineering technique include the useful plant having resistance to glyphosate or glufosinate.

The above useful plant includes that having an ability to synthesize, for example, a selective toxin such as that derived from the genus *Bacillus* which ability has been given by a genetic engineering technique.

Examples of the toxin expressed by such a genetically modified plant include insecticidal proteins derived from *Bacillus cereus* and *Bacillus popilliae;* δ-endotoxins such as Cry1Ab, Cry1Ac, Cry1F, Cry1Fa2, Cry2Ab, Cry3A, Cry3Bb1 and Cry9C, and insecticidal proteins such as VIP 1, VIP 2, VIP 3 and VIP 3A both derived from derived from *Bacillus thuringiensis;* insecticidal proteins derived from nematodes; toxins produced by animals such as scorpion toxins, spider toxins, bee toxins and insect-specific nerve toxins; fungal toxins; plant lectin; agglutinin; protease inhibitors such as trypsin inhibitors, serine protease inhibitors, patatin, cystatin, and papain inhibitors; ribosome-inactivating proteins (RIP) such as ricin, corn-RIP, abrin, luffin, saporin, and briodin; steroid metabolizing enzymes such as 3-hydroxysteroid oxidase, ecdysteroid-UDP-glucosyltransferase, and cholesterol oxidase; ecdysone inhibitors; HMG-CoA reductase; ion channel inhibitors such as sodium channel inhibitors and calcium channel inhibitors; juvenile hormone esterase; diuretic hormone receptors; stilbene synthase; bibenzyl syntase; chitinase; and glucanase.

The insecticidal toxin produced by such a genetically modified plant also includes hybrid toxins of δ-endotoxins such as Cry1Ab, Cry1Ac, Cry1F, Cry1Fa2, Cry2Ab, Cry3A, Cry3Bb1 and Cry9C, and insecticidal proteins such as VIP 1, VIP 2, VIP 3 and VIP 3A; and toxins in which a part of amino acids constituting an insecticidal protein is deleted or modified. The hybrid toxin is made by a new combination of different domains of the insecticidal proteins by a genetic engineering technique. An example of the toxin in which a part of amino acids constituting an insecticidal protein is deleted includes Cry1Ab in which a part of amino acids is deleted. An example of the toxin in which a part of amino acids constituting an insecticidal protein is modified includes a toxin in which one or more of amino acids of a natural toxin are substituted. Examples of these toxins and recombinant plants capable of synthesizing these toxins are described, for example, in EP-A-0 374 753, WO 93/07278, WO 95/34656, EP-A-0 427 529, EP-A-451 878, and WO 03/052073. Toxins contained in these recombinant plants give the plants resistant to, particularly, Coleoptera pests, Diptera pests, or Lepidoptera pests.

In addition, genetically modified plants containing one or plural insecticidal pest-resistant genes and expressing one or plural toxins have been already known, and some of them are commercially available.

The above useful plant also includes that to which the ability to produce an anti-pathogenic substance having selective activity has been given by a genetic engineering technique. As examples of the anti-pathogenic substance, a PR protein is known (PRPs, EP-A-0 392 225). Such an anti-pathogenic substance and a genetically modified plant producing the same are described, for example, in EP-A-0 392 225, WO 95/33818, and EP-A-0 353 191. Examples of the anti-pathogenic substance expressed in such the genetically modified plant include ion channel inhibitors such as sodium channel inhibitor, and calcium channel inhibitor (KP1, KP4, KP6 toxins produced by viruses are known); stilbene cynthase; bibenzyl cynthase; chitinase; glucanase; PR protein; anti-pathogenic substances produced by microorganisms such as peptide antibiotics, heterocycle-containing antibiotics, and protein factors involved in plant disease-resistance (referred to as plant disease-resistant genes, and described in WO 03/000906).

### Examples

Hereinafter, the present invention will be explained in more detail by the following Formulation Examples, and Test Examples, but the present invention is not limited to them. In the following Examples, all the "parts" are by weight unless otherwise stated.

### Formulation Example 1

A wettable formulation is obtained by thoroughly pulverizing and mixing 10 parts of imazosulfuron, 20 parts of pendimethalin, 3 parts of calcium lignin sulfonate, 2 parts of sodium lauryl sulfate and 65 parts of synthetic hydrous silicon oxide.

### Formulation Example 2

A wettable formulation is obtained by thoroughly pulverizing and mixing 5 parts of imazosulfuron, 40 parts of pendimethalin, 3 parts of calcium lignin sulfonate, 2 parts of sodium lauryl sulfate and 50 parts of synthetic hydrous silicon oxide.

### Formulation Example 3

A wettable formulation is obtained by thoroughly pulverizing and mixing 1 part of imazosulfuron, 40 parts of pendimethalin, 3 parts of calcium lignin sulfonate, 2 parts of sodium lauryl sulfate and 54 parts of synthetic hydrous silicon oxide.

### Formulation Example 4

A suspension formulation is obtained by mixing 10 parts of imazosulfuron, 20 parts of pendimethalin, 3 parts of polyoxyethylene sorbitan monooleate, 3 parts of CMC (carboxymethylcellulose) and 64 parts of water, and wet-pulverizing the mixture so that the particle size becomes 5 µm or smaller.

### Formulation Example 5

A suspension formulation is obtained by mixing 5 parts of imazosulfuron, 40 parts of pendimethalin, 3 parts of polyoxyethylene sorbitan monooleate, 3 parts of CMC (carboxymethylcellulose) and 49 parts of water, and wet-pulverizing the mixture so that the particle size becomes 5 µm or smaller.

### Formulation Example 6

A suspension formulation is obtained by mixing 1 part of imazosulfuron, 40 parts of pendimethalin, 3 parts of polyoxyethylene sorbitan monooleate, 3 parts of CMC (carboxymethylcellulose) and 53 parts of water, and wet-pulverizing the mixture so that the particle size becomes 5 µm or smaller.

### Formulation Example 7

A granular formulation is obtained by placing 1 part of imazosulfuron, 8 parts of pendimethalin, 0.5 part of Neocol Y^{™} (dialkyl sulfosuccinate surfactant), 2 parts of Tokisanon GR31A^{™} (polycarboxylate anionic surfactant), 30 parts of Kunigel V1^{™} (bentonite) and 58.5 parts of calcium carbonate in a miniature kneader, mixing and kneading the mixture, granulating with an extrusion granulator (RG-5M manufactured by Kikusui Seisakusyo Ltd.), drying with a fluidized bed drier (MDB-400 manufactured by Fuji Paudal co., ltd.), and then sifting through a 16 to 48 mesh sieve.

Hereinafter, Test Examples will be shown.

### Evaluation Criteria

the herbicidal activity is evaluated by dividing the activity into 11 stages of 0 to 10 and expressed by 0, 1, 2, 3, 4, 5, 6, 7, 8, 9, and 10, wherein "0" indicates that the emergence or growing state of a test weed at the examination has no or little difference from that of an untreated control, and "10" indicates that a test plant is completely withered and death, or their emergence or growth is completely inhibited. The phytotoxicity to a crop is evaluated by indicating "harmless" in case that no or little phytotoxicity is recognized, "light" in case that light phytotoxicity is recognized, "medium" in case that medium phytotoxicity is recognized, or "severe" in case that severe phytotoxicity is recognized.

### Test Example 1

Field soil was filled in a plastic pot of 32 cm wide, 22 cm long and 8 cm high, and seeds of wheat (species: Norin No. 61), *Alopecurus myosuroides, Lolium multiflorum, Matricaria chamomilla, Sinapis arvensis,* and *Stellaria media* were sowed thereon.

On the day of sowing, an imazosulfuron suspension formulation (a 40% imazosulfuron-containing suspension formulation, trade name: Sibatite 40 manufactured by Sumitomo Chemical Co., Ltd.) and, a pendimethalin emulsifiable concentrate (a 30% pendimethalin-containing emulsifiable concentrate, trade name: Go-go-san 30 manufactured by BASF) were mixed, diluted with water and uniformly sprayed on the surface of soil with a small sprayer so that their amounts became those as shown in Table 1.

The plants were raised in a greenhouse and herbicidal activity and pytotoxicity were determined 35 days after the chemical treatment. The results are shown in Table 1.

**Table 1**

| Test compounds | Amounts of active ingredients (g/ha) | Herbicidal activity | | | | Phytotoxicity |
|---|---|---|---|---|---|---|
| | | Am | Lm | Mc | Sa | Wheat |
| Imazosulfuron + Pendimethalin | 25 + 800 | 9 | 8 | 10 | 10 | harmless |
| | 100 + 800 | 8 | 10 | 10 | 10 | harmless |

| | | | | | | |
|---|---|---|---|---|---|---|
| (wherein Am represents *Alopecurus myosuroides,* Lm represents *Lolium multiflorum,* Mc represents *Matricaria chamomilla,* and Sa represents *Sinapis arvensis.*) | | | | | | |

As shown in the above Test Example, in the groups treated with the composition of the present invention, excellent herbicidal activities were obtained. On the other hand, no phytotoxicity which became a problem for wheat was caused.

### Test Example 2

Field soil was filled in a plastic pot of 32 cm wide, 22 cm long and 8 cm high, and seeds of wheat (species: Norin No. 61), *Sinapis arvensis,* and *Stellaria media* were sowed thereon.

Ten days after sowing, each of an imazosulfuron suspension formulation (a 40% imazosulfuron-containing suspension formulation, trade name: Sibatite 40 manufactured by Sumitomo Chemical Co., Ltd.), a pendimethalin emulsifiable concentrate (a 30% pendimethalin-containing emulsifiable concentrate, trade name: Go-go-san 30 manufactured by BASF) and a mixed formulation prepared by mixing the imazosulfuron suspension formulation and the pendimethalin emulsifiable concentrate was diluted with water and uniformly sprayed on the plants from above with a small sprayer so that their amounts became those as shown in Table 2.

The plants were raised in a greenhouse and herbicidal activity and phytotoxicity were determined 21 days after the chemical treatment. The results are shown in Table 2.

**Table 2**

| Test compounds | Amounts of active ingredients (g/ha) | Herbicidal activity | | | Phytotoxicity |
|---|---|---|---|---|---|
| | | Sa | Sm | Ca | Wheat |
| Imazosulfuron | 100 | 10 | 10 | 3 | harmless |
| Pendimethalin | 800 | 2 | 9 | 5 | harmless |
| Imasozulfuron + Pendimethalin | 100 + 800 | 10 | 10 | 10 | harmless |

| | | | | | |
|---|---|---|---|---|---|
| (wherein Sa represents *Sinapis arvensis,* Sm represents *Stellaria* media, and Ca represents *Chenopodim album.*) | | | | | |

As shown in the above Test Example, in the group treated with the composition of the present invention, excellent herbicidal activities were obtained. In particular, for *Chenopodim album,* the synergistic excellent herbicidal activity was obtained as compared with the group solely using imazosulfuron or pendimethalin. On the other hand, phytotoxicity for wheat was evaluated as "harmless".

### Test Example 3

Field soil was filled in a plastic pot of 32 cm wide, 22 cm long and 8 cm high, and seeds of wheat (species: Burgandia), barley (species: Fanfare), and *Matricaria chamomilia* were sowed thereon.

On the day of sowing, an imazosulfuron suspension formulation (a 40% imazosulfuron-containing suspension formulation, trade name: Sibatite 40 manufactured by Sumitomo Chemical Co., Ltd.) and, a pendimethalin emulsifiable concentrate (a 30% pendimethalin-containing emulsifiable concentrate, trade name: Go-go-san 30 manufactured by BASF) were mixed, and uniformly sprayed on the surface of soil with a small sprayer so that their amounts became those as shown in Table 3. For comparison purposes, a granular wettable formulation of 1-(4,6-dimethoxypyrimidin-2-yl)-3-(2-ethylsulfonylimidazo[1,2-a]pyridin-3-ylsulfonylurea (generic name: sulfosulfuron) (granular wettable formulation containing 80% of Compound 3, trade name: Monitor 80WDG manufactured by Monsanto) was mixed with the above pendimethalin emulsifiable concentrate, and the mixture was uniformly sprayed on the surface of soil with a small spray so that their amounts became those shown in Table 3. Further, for comparison purposes, methyl 4-iodo-2-[3-(4-methoxy-6-methyl-1,3,5-triazin-2-yl)ureidosulfonyl]benzoate sodium salt (generic name: iodosulfuron-methyl-sodium was dissolved in acetone, diluted with water, and mixed with the above pendimethalin emulsifiable concentrate. The mixture was uniformly spayed on the surface of soil with a small spray so that their amounts became those shown in Table 3.

The plants were raised in a greenhouse and herbicidal activity and phytotoxicity were determined 28 days after the chemical treatment as shown in Table 3. The results are shown in Table 3.

**Table 3**

| Test compounds | Amounts of active ingredients (g/ha) | Herbicidal activity | Phytotoxicity | |
|---|---|---|---|---|
| | | | Wheat | Barley |
| Imazosulfuron + Pendimethalin | 25 + 800 | 10 | harmless | harmless |
| | 100 + 800 | 10 | harmless | harmless |
| Comparison: Sulfosulfuron + Pendimethalin | 25 + 800 | 10 | harmless | severe |
| | 100 + 800 | 10 | harmless | severe |
| Comparison: iodosulfuron-methyl-sodium + Pendimethalin | 25 + 800 | 10 | medium | severe |
| | 100 + 800 | 10 | severe | severe |

As shown in the above Test Example, in the groups treated with the composition of the present invention, excellent herbicidal activity on *Matricaria chamomilla* were observed. On the other hand, the phytotoxicity for both wheat and barley was evaluated as "harmless".

### Test Example 4

Field soil was filled in a plastic pot of 32 cm wide, 22 cm long and 8 cm high, and tubers of *Cyperus esculentus* were planted.

On the day of planting, each of an imazosulfuron suspension formulation (a 40% imazosulfuron-containing suspension formulation, trade name: Sibatite 40 manufactured by Sumitomo Chemical Co., Ltd.), a pendimethalin emulsifiable concentrate (a 30% pendimethalin-containing emulsifiable concentrate, trade name: Go-go-san 30 manufactured by BASF) and a mixed formulation prepared by mixing the imazosulfuron suspension formulation and the pendimethalin emulsifiable concentrate was diluted with water and uniformly sprayed on the soil with a small sprayer so that their amounts became those as shown in Table 4.

The plants were raised in a greenhouse and herbicidal activity was determined 14 days after the chemical treatment. The results are shown in Table 4.

**Table 4**

| Test compounds | Amount of active ingredients (g/ha) | Herbicidal activity |
|---|---|---|
| Imazosulfuron | 25 | 4 |
| Pendimethalin | 50 | 0 |
| | 200 | 0 |
| Imazosulfuron + Pendimethalin | 25 + 50 | 9 |
| | 25 + 200 | 9 |

As shown in the above Test Example, in the group treated with the composition of the present invention, the synergistic excellent herbicidal activity was obtained as compared with the group solely using imazosulfuron or pendimethalin.

### Test Example 5

Field soil was filled in a plastic pot of 32 cm wide, 22 cm long and 8 cm high, and seeds of *Echinochloa crus-galli, Setaria faberi, Digitaria ciliaris, Abutilon theophrasti,* and *Portulaca oleracea* were sowed thereon. Further, two leaves-cucumber (species: Sagami Hanshiro) seedlings were transplanted thereinto.

On the day of sowing and transplanting, an imazosulfuron suspension formulation (a 40% imazosulfuron-containing suspension formulation, trade name: Sibatite 40 manufactured by Sumitomo Chemical Co., Ltd.) and, a pendimethalin emulsifiable concentrate (a 30% pendimethalin-containing emulsifiable concentrate, trade name: Go-go-san 30 manufactured by BASF) were mixed, diluted with water and uniformly sprayed on the surface of soil with a small spray so that their amounts became those as shown in Table 5.

The plants were raised in a greenhouse and herbicidal activity and phytotoxicity were determined 21 days after the chemical treatment. The results are shown in Table 5.

**Table 5**

| Test compounds | Amounts of active ingredients (g/ha) | Herbicidal activity | | | | | Phytotoxicity |
|---|---|---|---|---|---|---|---|
| | | Ec | Sf | Dc | At | Po | Transplanted cucumber |
| Imazosulfuron + Pendimetnalin | 25 + 800 | 10 | 10 | 10 | 8 | 9 | harmless |
| | 100 + 200 | 8 | 8 | 10 | 8 | 9 | harmless |
| | 100 + 800 | 10 | 10 | 10 | 8 | 9 | harmless |

| | | | | | | | |
|---|---|---|---|---|---|---|---|
| (wherein Ec represents *Eohinochloa crus-galli,* Sf represents Setaria *faberi,* Dc represents *Digitaria ciliaris,* At represents *Abutilon theophrasti,* and Po represents *Portulaca oleracea.*) | | | | | | | |

As shown in the above Test Example, in the groups treated with the composition of the present invention, excellent herbicidal activities were observed. On the other hand, phytotoxicity for transplanted cucumber was evaluated as "harmless".

### Test Example 6

Field soil was filled in a plastic pot of 24 cm diameter and 21 cm high, and tomato (species: Patio) was transplanted. Five days after transplanting, when tomato became 2 to 3 leaves, *Echinochloa crus-galli, Digitaria ciliaris, Amaranthus retroflexus,* and *Abutilon theophrasti* were sowed on the same pot.

On the day of sowing of *Echinochloa crus-galli, Digitaria ciliaris, Amaranthus retroflexus* and *Abutilon theophrasti,* an imazosulfuron granular formulation (a 0.3% imazosulfuron-containing suspension formulation, trade name: Takeoff manufactured by Sumitomo Chemical Co., Ltd.) and, a pendimethalin granular formulation (a 2% pendimethalin-containing emulsifiable concentrate, trade name: Go-go-san 2FG manufactured by BASF) were mixed, and uniformly scattered on the surface of soil by hand so that their amounts became those as shown in Table 6.

The plants were raised in a greenhouse and herbicidal activity and phytotoxicity were determined 29 days after the chemical treatment. The results are shown in Table 6.

**Table 6**

| Test compounds | Amounts of active ingredients (g/ha) | Herbicidal activity | | | | Phytotoxicity |
|---|---|---|---|---|---|---|
| | | Ec | Dc | Ar | At | Transplanted tomato |
| Imazosulfuron + Pendimethalin | 100 + 800 | 10 | 10 | 10 | 9 | harmless |
| | 100 + 3200 | 10 | 10 | 10 | 10 | harmless |
| | 400 + 800 | 10 | 10 | 10 | 10 | harmless |

| | | | | | | |
|---|---|---|---|---|---|---|
| (wherein Ec represents *Echinochloa crus-galli,* Dc represents *Digitaria ciliaris,* Ar represents *Amararthus retroflexus,* and At represents *Abutilon theophrasti)* | | | | | | |

As shown in the above Test Example, in the groups treated with the composition of the present invention, excellent herbicidal activities were obtained. On the other hand, phytotoxicity for transplanted tomato was evaluated as "harmless".

### Industrial Applicability

According to the present invention, it becomes possible to provide a herbicide composition having excellent effects, and the like.

## Claims

1. A herbicide composition comprising, as active ingredients, 1-(2-chloroimidazo[1,2-a]pyridin-3-ylsulfonyl)-3-(4,6-dimethoxypyrimidin-2-yl)urea and N-(1-ethylpropyl)-3,4-dimethyl-2,6-dinitrobenzenamine.

2. The herbicide composition according to claim 1, which contains 1-(2-chloroimidazo[1,2-a]pyridin-3-ylsulronyl)-3-(4,6-dimethoxypyrimidin-2-yl)urea and N-(1-ethylpropyl)-3,4-dimethyl-2,6-dinitrobenzenamine in an weight ratio of 1 : 0.5 to 1 : 100.

3. A weed control method, which comprises applying 1-(2-chloroimidazo[1,2-a]pyridin-3-ylsulfonyl)-3-(4,6-dimethoxypyrimidin-2-yl)urea and N-(1-ethylpropyl)-3,4-dimethyl-2,6-dinitrobenzenamine to soil of place in which weeds grow or are to grow, or weeds.

4. The weed control method according to claim 3, wherein 1-(2-chloroimidazo[1,2-a]pyridin-3-ylsulfonyl)-3-(4,6-dimethoxypyrimidin-2-yl)urea and N-(1-ethylpropyl)-3,4-dimethyl-2,6-dinitrobenzenamine are applied in a weight ratio of 1 : 0.5 to 1 : 100.

5. The weed control method according to claim 3, which is a method for controlling weeds in a wheat or barley field.

6. The weed control method according to claim 3, which is a method for controlling weeds in a wheat field.

7. The weed control method according to claim 4, which is a method for controlling weeds in a wheat field.

8. The weed control method according to claim 3, which is a method for controlling weeds in a vegetable field.

9. The weed control method according to claim 4, which is a method for controlling weeds in a vegetable field.

10. The weed control method according to claim 9, wherein the vegetable is cucumber or tomato.
